# EUROPÄISCHE PATENTSCHRIFT

(11) **EP 3 261 927 B1**
(45) Veröffentlichungstag und Bekanntmachung des Hinweises auf die Patenterteilung: **13.02.2019**
(21) Anmeldenummer: 16705549.0
(22) Anmeldetag: 22.02.2016
(51) Int. Cl.: B64D 11/06

(54) **FLUGZEUGSITZ MIT WÄRMETRANSPORTELEMENT**
AIRCRAFT SEAT WITH HEAT TRANSFER ELEMENT
SIÈGE D'AÉRONEF AVEC ÉLÉMENT DE TRANSFERT DE CHALEUR

(30) Priorität: 24.02.2015 DE 102015203308
(43) Veröffentlichungstag der Anmeldung: 03.01.2018
(73) Patentinhaber: Lufthansa Technik AG, 22335 Hamburg (DE)
(72) Erfinder: THOMASCHEWSKI, Oliver, 22846 Norderstedt (DE); MUIRHEAD, Andrew, 22848 Norderstedt (DE)
(74) Vertreter: Müller Verweyen
(86) Internationale Anmeldenummer: PCT/EP2016/053654
(87) Internationale Veröffentlichungsnummer: WO 2016/135087

(56) Entgegenhaltungen:
- WO-A1-94/20327
- DE-U1-202013 011 623
- US-A1- 2007 146 998
- US-A1- 2010 201 166
- US-A1- 2013 020 846

## Beschreibung

Die vorliegende Erfindung betrifft einen Flugzeugsitz mit den Merkmalen des Oberbegriffs von Anspruch 1. Dokument WO94/20327 offenbart den gleichen Gegenstand.

Aus der DE 10 2012 208 719 A1 ist ein Flugzeugsitz mit einem Sitzunterbau aus einem faserverstärkten Bauteil bekannt, beispielsweise aus einem kohlenstofffaserverstärkten Bauteil. Der Sitzunterbau ist an einer ersten Seite mit der Sitzfläche verbunden. Auf einer zweiten Seite ist der Sitzunterbau an einer Bodenanbindungsbaugruppe befestigt, so dass eine tragfähige mechanische Verbindung zwischen dem Sitzunterbau und der Bodenstruktur eines Flugzeugs hergestellt werden kann.

Der Sitzunterbau ist dabei aus einem biegesteifen Schalenbauteil ausgeführt, das eine zylinder- oder kegelförmige Geometrie aufweist. Der Vorteil dieser Geometrie besteht darin, dass im Vergleich zu einem Sitzunterbau, der durch ein Fachwerk gebildet ist, eine höhere Steifigkeit bei geringem Gewicht erreicht werden kann. Durch die erhöhte Steifigkeit des Sitzunterbaus wird in einem Crashfall ein Rotationszentrum einer Deformationsbewegung des Flugzeugsitzes in Richtung der Sitzfläche verlagert.

Weiter ist es aus der DE 10 2012 208 719 A1 bekannt, in einem durch das Schalenbauteil gebildeten Hohlraum elektronische Geräte oder ein funktionelles Objekt, wie beispielsweise ein Pneumatik- oder Hydrauliksystem, aufzunehmen. Der Vorteil der Anordnung in dem Hohlraum liegt darin, dass die elektronischen Geräte bzw. funktionellen Objekte vor Umgebungseinflüssen geschützt sind. Des Weiteren wird durch die hohe Steifigkeit des Schalenbauteils sichergestellt, dass die elektronischen Geräte bzw. funktionellen Objekte mechanisch geschützt sind.

Nachteilig an der Anordnung der elektronischen Geräte bzw. funktionellen Objekte in dem Hohlraum ist jedoch, dass eine adäquate Abgabe der Wärmeenergie aus dem Hohlraum nicht gewährleistet ist. Insbesondere die in dem Hohlraum angeordneten elektrischen Geräte geben durch ihre thermische Verlustleistung an die Umgebung Wärme ab. Dadurch, dass der Hohlraum geschlossen ist, findet keine ausreichende Abgabe der Wärmeenergie aus dem Hohlraum an die Umgebung über einen Luftmassenstrom statt. Weiter weisen die Wände aus einem faserverstärkten Werkstoff eine geringe Wärmeleitfähigkeit auf, so dass über die Wand nur eine geringe Wärmeenergie an die Umgebung abgegeben werden kann. Die aus der DE 10 2012 208 719 A1 bekannte Konstruktion des Sitzunterbaus bildet damit einen weitestgehend thermisch isolierten Hohlraum.

Durch die thermisch isolierende Wirkung des Schalenbauteils und die von den elektronischen Geräten bzw. funktionellen Objekten abgegebene Wärmeenergie kann es in dem Hohlraum zu einem Hitzestau kommen. In der Folge können die elektronischen Geräte bzw. funktionellen Objekte überhitzen, so dass es unter Umständen zu einem Überschreiten der Betriebstemperatur kommen kann und damit die Systemzuverlässigkeitseigenschaften des Systems negativ beeinflusst werden. Das führt dazu, dass der Flugzeugsitz nicht vollumfänglich nutzbar ist, was zu Komforteinbußen des Passagiers führen kann. Weiterhin kann sich die erhöhte Temperatur durch einen Hitzestau negativ auf die Materialeigenschaften des Schalenbauteils, insbesondere Schalenbauteils aus Faserverbundwerkstoffen, auswirken.

Aufgabe der Erfindung ist es, einen Flugzeugsitz bereitzustellen, bei dem die Wärmeübertragungseigenschaften von dem Hohlraum in die Umgebung verbessert sind und gleichzeitig die Festigkeitseigenschaften des Schalenbauteils erhalten bleiben. Die Aufgabe wird durch die Merkmale des unabhängigen Anspruchs gelöst.

Gemäß dem Grundgedanken der Erfindung wird ein Flugzeugsitz mit einem Sitzunterbau vorgeschlagen, wobei der Sitzunterbau an einer ersten Seite an einer Sitzeinheit des Flugzeugsitzes befestigbar ist, und der Sitzunterbau an einer zweiten Seite zur flugzeugfesten Befestigung an einer Bodenanbindungsbaugruppe befestigbar ist, wobei der Sitzunterbau durch wenigstens ein biegesteifes Schalenbauteil gebildet ist, wobei das Schalenbauteil einen Hohlraum zur Aufnahme von mindestens einem Funktionselement aufweist, wobei der Hohlraum geschlossen ist, wobei ein erstes Wärmetransportelement, umfassend einen inneren und einen äußeren Teilabschnitt, vorgesehen ist, wobei der innere Teilabschnitt zur Aufnahme einer von dem Funktionselement erzeugten Wärmeenergie dem Hohlraum zugeordnet ist und in Kontakt mit dem Funktionselement steht, wobei der äußere Teilabschnitt zur Abgabe der Wärmeenergie einer äußeren Umgebung des Schalenbauteils zugeordnet ist. Das Funktionselement ist hängend in dem Hohlraum angeordnet und an der Unterseite des ersten Wärmetransportelement befestigt.

Durch die erfindungsgemäße Lösung kann erreicht werden, dass die Wärmeenergie in dem Hohlraum von dem inneren Teilabschnitt des ersten Wärmetransportelements aufgenommen werden kann. Die aufgenommene Wärmeenergie wird anschließend an den äußeren Teilabschnitt weitergeleitet, so dass die Wärmeenergie aus dem Hohlraum in die äußere Umgebung abgegeben werden kann. Ferner kann damit auf Durchbrüche zur Belüftung in dem Schalenbauteil verzichtet werden, was eine verbesserte Stabilität des Schalenbauteils zur Folge hat. Unter der äußeren Umgebung ist dabei der Raum außerhalb des Hohlraums zu verstehen. Dazu gehören auch Komponenten des Flugzeugsitzes einschließlich des Sitzunterbaus und der Sitzeinheit, die außerhalb des Hohlraums liegen. Grundsätzlich ist davon auszugehen, dass in dem Hohlraum durch die wärmeerzeugenden Funktionselemente eine höhere Temperatur herrscht als in der äußeren Umgebung, d.h. das Funktionselement erwärmt den Hohlraum.

Das Schalenbauteil ist vorzugsweise eine gleichmäßig gekrümmte Struktur. Vorzugsweise ist das Schalenbauteil röhrenförmig bzw. in Form eines Hohlzylinders, deren Achse im Einbauzustand vertikal ist. Das Schalenbauteil überträgt alle mechanisch relevanten Lasten zwischen der Sitzeinheit und der Bodenanbindungsbaugruppe.
Der Hohlraum selbst ist durch das Schalenbauteil gebildet, das an der Oberseite und an der Unterseite verschlossen ist. An der Oberseite ist das Schalenbauteil vorzugsweise durch ein Bauteil der Sitzeinheit verschlossen, während an der Unterseite vorzugsweise die Bodenanbindungsbaugruppe den Hohlraum verschließt.

Das Bauteil der Sitzeinheit ist vorzugsweise gleichzeitig das erste Wärmetransportelement. Folglich können in diesem vorteilhaften Ausführungsbeispiel alle mechanischen Lasten, welche aus der Bodenanbindungsbaugruppe in die Sitzeinheit und auf einen Passagier übertragen werden müssen, in das erste Wärmetransportelement eingeleitet werden. Das Wärmetransportelement ist somit lasttragende Struktur, d.h. es überträgt unter anderem Kräfte aus einwirkenden Beschleunigungen auf die Sitzstruktur, die ein vielfaches, vorzugsweise mehr als ein 50faches, der Lasten betragen, die aus der Beschleunigung auf die Masse des Wärmetransportelements resultieren.

Das erste Wärmetransportelement bildet damit eine Wärmesenke, die die Wärmeenergie in dem Hohlraum in einem räumlich begrenzten Raum, nämlich im Bereich des ersten Teilabschnitts, aufnimmt und anschließend an die äußere Umgebung abgibt. Das erste Wärmetransportelement ist somit dadurch gekennzeichnet, dass die Wärmeenergie räumlich gerichtet von dem inneren Teilabschnitt aufgenommen wird und anschließend über den äußeren Teilabschnitt an die äußere Umgebung abgegeben wird. Eine gleichmäßige Abgabe der Wärmeenergie aus dem Hohlraum über die durch das Schalenbauteil, die Bodenanbindungsbaugruppe und/oder die Sitzeinheit gebildeten Wände ist damit nicht unter einem Wärmetransportelement im Sinne der Erfindung zu verstehen.

Vorzugsweise ist das erste Wärmetransportelement an der Oberseite, d.h. an der der Sitzeinheit zugewandten Seite, angeordnet. Weiter vorzugsweise dient das erste Wärmetransportelement damit auch als Abgrenzung zwischen dem Hohlraum und der äußeren Umgebung, d.h. der Hohlraum wird vorzugsweise zumindest teilweise durch das erste Wärmetransportelement gebildet. Vorteilhaft nimmt das erste Wärmetransportelement von der Innenfläche des Hohlraums nur einen Anteil von weniger als 50 % ein, weiter vorzugsweise von weniger als 25 % und insbesondere vorzugsweise von weniger als 15 %.

Weiter wird vorgeschlagen, dass das Material des ersten Wärmetransportelements eine höhere Wärmeleitfähigkeit aufweist als das Material des Schalenbauteils. Durch die höhere Wärmeleitfähigkeit des ersten Wärmetransportelements kann die Wärme aus dem Hohlraum gerichtet an die äußere Umgebung abgegeben werden, d.h. der über das erste Wärmetransportelement abgegebene Wärmestrom ist um ein Vielfaches höher, vorzugsweise um mehr als das Zweifache höher, als der Wärmestrom, der über das Schalenbauteil abgegeben wird. Dadurch ergibt sich auch der Vorteil, dass die Wärme aus dem Hohlraum an die äußere Umgebung effektiver übertragen werden kann.

Weiter wird vorgeschlagen, dass das Schalenbauteil aus Faserverbundwerkstoff, insbesondere kohlenstofffaserverstärkte Kunststoffe, gebildet ist. Durch die vorgeschlagene Lösung kann das Schalenbauteil mit einer sehr hohen Festigkeit bei einem gleichzeitig geringen Gewicht hergestellt werden. Dabei kann der Nachteil der geringen Wärmeleitfähigkeit des Faserverbundwerkstoffes aufgrund der erfindungsgemäßen Lösung in Kauf genommen werden.

Weiter vorzugsweise ist das erste Wärmetransportelement durch ein Metallbauteil gebildet. Ein metallischer Werkstoff bietet den Vorteil, dass er eine hohe Wärmeleitfähigkeit aufweist und gleichzeitig den Stabilitätsanforderungen gerecht wird. Das erste Wärmetransportelement kann damit auch kostengünstig hergestellt werden und bietet daneben die Möglichkeit, auf einfache Art und Weise mit der Struktur des Flugzeugssitzes, beispielsweise dem Sitzunterbau, verbunden zu werden.

Es ist vorteilhaft, wenn der äußere Teilabschnitt des ersten Wärmetransportelements mit einem äußeren Bauteil des Sitzunterbaus und/oder der Sitzeinheit verbunden ist. Dadurch kann die in dem ersten Wärmetransportelement gespeicherte Wärmeenergie nicht nur durch Strahlung und/oder Konvektion an das den äußeren Teilabschnitt umgebende Fluid, beispielsweise die Luft, abgegeben werden.

Durch den Kontakt zwischen dem ersten Transportelement und einem äußeren Bauteil des Sitzunterbaus und/oder der Sitzeinheit kommt es zu einer Wärmeübertragung zwischen diesen Bauteilen, so dass die in dem ersten Wärmetransportelement gespeicherte Wärmeenergie effizient an dieses vorzugsweise metallische Bauteil abgegeben werden kann. Über die äußeren Bauteile erfolgt dann ebenfalls eine Wärmeübertragung an die weitere Umgebung. Insgesamt wird damit eine erhöhte Abgabe der Wärmeenergie von dem ersten Wärmetransportelement erreicht.

Vorzugsweise ist der äußere Teilabschnitt des ersten Wärmetransportelements zwischen dem Sitzunterbau und der Sitzeinheit angeordnet. Durch diese Anordnung kann das erste Wärmetransportelement an der Oberseite des Sitzunterbaus, das durch ein Schalenbauteil gebildet ist, positioniert werden. Gleichzeitig ist das erste Wärmetransportelement damit in unmittelbarer Nähe zu der Sitzeinheit angeordnet. Weiter vorzugsweise ist das erste Wärmetransportelement über den äußeren Teilabschnitt mit der Sitzeinheit verbunden. Damit kann die Wärmeenergie des ersten Wärmetransportelements direkt an die Sitzeinheit abgegeben werden, wodurch eine verbesserte Wärmeabfuhr erreicht werden kann.

In einer vorteilhaften Ausführungsform ist das erste Wärmetransportelement als ein Verbindungsmittel zur Verbindung der Sitzeinheit mit dem Sitzunterbau ausgeführt. Durch diese Funktionsintegration kann das Verbindungsmittel, das für die Verbindung der Sitzeinheit mit dem Sitzunterbau ohnehin erforderlich ist, auch für den Wärmetransport von dem Hohlraum in die äußere Umgebung genutzt werden. Vorzugsweise ist das Verbindungsmittel als metallischer Flansch ausgeführt.

In bevorzugten Ausführungsbeispielen ist das Funktionselement oder sind die Funktionselemente an dem Verbindungsmittel mit einem lösbaren Verbindungsmittel, insbesondere Schrauben, befestigt, wobei in einem resultierenden Kontaktbereich zwischen Verbindungselement bzw. erstem Wärmetransportelement und Funktionselement Wärmeleitpaste angeordnet ist. Diese verbessert die Ableitung von Wärme aus dem Funktionselement in das Verbindungselement bzw. in das erste Wärmetransportelement.

Es wird weiter vorgeschlagen, dass wenigstens zwei separate Funktionselemente in dem Hohlraum vorgesehen sind. Die wenigstens zwei Funktionselemente können dabei vorzugsweise identisch sein oder dieselbe Funktion erfüllen, um durch Redundanz die Systemzuverlässigkeit zu erhöhen. Vorzugsweise können aber auch Funktionselemente unterschiedlicher Art in dem Hohlraum angeordnet sein, z.B. eine Sitzsteuerung und ein Bordunterhaltungssystem.

Weiter vorzugsweise sind die separaten Funktionselemente horizontal und/oder vertikal zueinander angeordnet. Unter einer vertikalen Anordnung ist insbesondere eine Anordnung gemeint, bei der die Funktionselemente übereinandergestapelt angeordnet sind. Unter einer horizontalen Anordnung ist die Anordnung der Funktionselemente in einer horizontalen Ebene, beispielsweise in Form von Tortenstücken, zu verstehen. Weiterhin kann unter einer horizontalen Anordnung eine Anordnung von Funktionselementen nebeneinander verstanden werden.

Erfindungsgemäß ist das Funktionselement hängend in dem Hohlraum des Sitzunterbaus angeordnet, wobei es an der Unterseite des ersten Wärmetransportelements befestigt ist. Eine hängende Anordnung ist vorteilhaft, da zusätzlich mittels freier Konvektion Wärme vom Funktionselement auf das erste Wärmetransportelement übertragen werden kann.

Vorteilhaft ist in dem Hohlraum ein zweites Wärmetransportelement vorgesehen. Das zweite Wärmetransportelement ist vorzugsweise an seinem ersten Ende mit dem ersten Wärmetransportelement verbunden. Ein zweites Ende des zweiten Wärmetransportelements ist innerhalb des Hohlraums so angeordnet, dass es die Wärmeenergie einer Wärmequelle, beispielsweise die des Funktionselements, möglichst effizient aufnehmen kann. Es wird so eine effektive Abgabe der Wärmeenergie von beliebigen Stellen des Hohlraums über das zweite und erste Wärmetransportelement an die äußere Umgebung erzielt.

Es ist weiter vorteilhaft, wenn das zweite Wärmetransportelement durch ein Wärmerohr gebildet ist. Durch die Verwendung des Wärmerohrs, auch "Heat-Pipe" genannt, kann eine effektive Wärmeübertragung von den Funktionselementen zu dem ersten Wärmetransportelement erfolgen.

Vorzugsweise ist das zweite Wärmetransportelement zur wärmetechnischen Kopplung der Funktionselemente untereinander vorgesehen. So kann beispielsweise erreicht werden, dass bei mehreren Funktionselementen ein Wärmetransport unter den einzelnen Funktionselementen möglich ist. Damit wird beispielsweise vermieden, dass jedes Funktionselement direkt mit dem ersten Wärmetransportelement verbunden sein muss.

Durch die wärmetechnische Kopplung der Funktionselemente untereinander kann die im Betrieb erzeugte Wärme auch effektiv unter den entsprechenden Funktionselementen verteilt werden. So kann beispielsweise die Wärme eines sehr heißen Funktionselements zum Ausgleich an ein kühleres Funktionselement übertragen werden.

Vorzugsweise können die Funktionselemente untereinander auch elektronisch miteinander verbunden sein.

Weiter vorzugsweise ist ein erstes Funktionselement über das zweite Wärmetransportelement mit dem ersten Wärmetransportelement wärmetechnisch gekoppelt. Vorzugsweise ist dabei das zweite Ende des zweiten Wärmetransportelements mit einem ersten Funktionselement wärmetechnisch gekoppelt. Alternativ oder zusätzlich kann auch ein Zwischenabschnitt des zweiten Wärmetransportelements, das zwischen dem ersten und einem zweiten Ende des zweiten Wärmetransportelements angeordnet ist, mit einem Funktionselement wärmetechnisch gekoppelt sein.

Unter einer wärmetechnischen Kopplung ist im Kontext dieser Anmeldung eine Kopplung von wenigstens zwei Gegenständen zu verstehen, wobei durch die Kopplung die Wärmeleitfähigkeit an der Kopplungsstelle im Vergleich zu der Umgebungsluft erhöht wird. Vorzugsweise wird dies durch den Kontakt zweier metallischer Flächen dieser Gegenstände realisiert. Weiter vorzugsweise wird dieser Kontakt mit Wärmeleitpaste verbessert, welche an der Kopplungsstelle angeordnet ist.

Durch die Anbindung der Funktionselemente über das zweite Wärmetransportelement an das erste Wärmetransportelement kann sichergestellt werden, dass die Wärme von den Funktionselementen im Wesentlichen unabhängig von deren Anordnung innerhalb des Hohlraums effektiv an das erste Wärmetransportelement weitergeleitet werden kann.

Es wird weiter vorgeschlagen, dass das zweite Wärmetransportelement durch das zweite Funktionselement verläuft. Durch diese Anordnung kann erreicht werden, dass das zweite Ende des zweiten Wärmetransportelements mit dem ersten Funktionselement wärmetechnisch gekoppelt ist. Das zweite Wärmetransportelement führt dann durch das zweite Funktionselement, das bei dieser Ausführungsform zwischen dem inneren Teilabschnitt des Wärmetransportelements und dem ersten Funktionselement angeordnet ist, so dass eine direkte Verbindung des ersten Funktionselements mit dem ersten Wärmetransportelement ermöglicht wird. Durch diese direkte Verbindung kann eine effektive Wärmeübertragung zwischen dem ersten Funktionselement über das zweite und erste Wärmetransportelement an die Umgebung erfolgen.

Dadurch, dass das zweite Wärmetransportelement durch das zweite Funktionselement verläuft, kann auch das zweite Funktionselement wärmetechnisch mit dem zweiten Wärmetransportelement gekoppelt werden. Es wird so neben der Wärmeenergie des ersten Funktionselements auch die Wärmeenergie des zweiten Funktionselements von dem zweiten Wärmetransportelement aufgenommen und an das erste Wärmetransportelement weitergeleitet. Die beiden Funktionselemente sind damit wärmetechnisch in Reihe geschaltet.

Ein zusätzliches zweites Wärmetransportelement zur wärmetechnischen Kopplung des zweiten Funktionselements mit dem ersten Wärmetransportelement, also eine wärmetechnische Parallelschaltung, ist damit nicht erforderlich.

Vorzugsweise ist der innere Teilabschnitt des ersten Wärmetransportelements so zu dem Funktionselement angeordnet, dass zwischen dem Funktionselement und dem inneren Teilabschnitt des ersten Wärmetransportelements eine konvektive Wärmeübertragung möglich ist. Hierzu ist zwischen dem Funktionselement und dem ersten Wärmetransportelement eine strömungstechnische Verbindung vorgesehen. Vorzugsweise ist das Funktionselement dabei so ausgeführt, dass es eine möglichst große vertikale ausgerichtete Außenfläche aufweist, an der das sich erwärmende Fluid, vorzugsweise Luft, entlangströmen kann.

Weiter vorzugsweise ist das Funktionselement so unterhalb des ersten Wärmetransportelements angeordnet, dass das an den vertikalen Flächen erwärmte Fluid an dem ersten Wärmetransportelement vorbeiströmt, um so die Wärmeenergie an das erste Wärmetransportelement abgeben zu können. Damit wird durch Konvektion ein Anteil der von dem Funktionselement erzeugten Wärmeenergie an das erste Wärmetransportelement abgegeben.

Weiter ist es vorteilhaft, wenn das Funktionselement im Inneren einen sich von einer Öffnung an einer Oberseite bis zu einer Öffnung an einer Unterseite erstreckenden ersten Strömungskanal aufweist. Vorzugsweise ist der Strömungskanal zylindrisch ausgeführt und vertikal ausgerichtet. Weiter vorzugsweise ist der Strömungskanal zentral in dem Funktionselement angeordnet, so dass die Wärmeenergie des Funktionselements gleichmäßig an die den Strömungskanal durchströmende Luft abgegeben werden kann.

Vorzugsweise ist die Öffnung an der Oberseite mit der Öffnung an der Unterseite über einen zweiten Strömungskanal strömungstechnisch verbunden, so dass eine Zirkulation der Luft ermöglicht wird. In einer bevorzugten Ausführungsform ist der zweite Strömungskanal durch den Zwischenraum gebildet, der zwischen der Innenwand des Hohlraums und der Außenwand des Funktionselements entsteht.

Insbesondere durch die Kombination der verschiedenen Wärmeübertragungsmechanismen kann eine effektive Wärmeübertragung von den Funktionselementen an die äußere Umgebung über das erste Wärmetransportelement gewährleistet werden.

Die Erfindung wird im Folgenden anhand bevorzugter Ausführungsformen unter Bezugnahme auf die beigefügten Figuren erläutert. Dabei zeigt:
- Fig. 1: einen erfindungsgemäßen Flugzeugsitz;
- Fig. 2: einen schalenförmigen Sitzunterbau;
- Fig. 3: eine erste Ausführungsform der Erfindung mit einem schalenförmigen Sitzunterbau mit einem Funktionselement und einem ersten Wärmetransportelement;
- Fig. 4: eine zweite Ausführungsform der Erfindung mit einem schalenförmigen Sitzunterbau mit einem Funktionselement, der einen Strömungskanal aufweist;
- Fig. 5: eine dritte Ausführungsform der Erfindung mit einem schalenförmigen Sitzunterbau mit einem zweiten Wärmetransportelement; und
- Fig. 6: verschiedene Anordnungen der Funktionselemente.

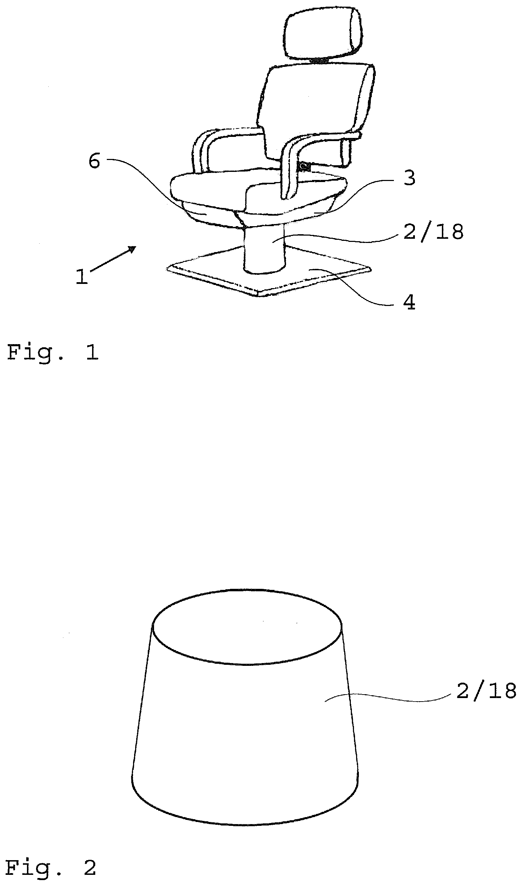

In Fig. 1 ist ein erfindungsgemäßer Flugzeugsitz 1 mit einem Sitzunterbau 2 dargestellt. Der Sitzunterbau 2 ist an einer ersten Seite mit einer Sitzeinheit 3 verbunden. Auf einer zweiten Seite ist der Sitzunterbau 2 an einer Bodenanbindungsbaugruppe 4 befestigt. Mit der Bodenanbindungsbaugruppe 4 kann eine steife mechanische Verbindung zwischen dem Sitzunterbau 2 und einer Bodenstruktur eines Flugzeugs hergestellt werden.

Der Sitzunterbau 2 stellt die mechanische Verbindung zwischen der Bodenanbindungsbaugruppe 4 und der Sitzeinheit 3 her. Der Sitzunterbau 2 ist in einer vorteilhaften Ausführungsform sehr steif ausgeführt, so dass Crashlasten in einer Richtung der Bodenebene nur zu geringen Verschiebungen auf der ersten Seite des Sitzunterbaus 2 führen, wodurch eine Rotation oder ein Kippen des Flugzeugsitzes 1 weitgehend verhindert wird.

Fig. 2 zeigt eine Detailansicht eines Sitzunterbaus 2, der vorzugsweise einen elliptischen Querschnitt und die Form eines Kegelabschnitts aufweist, so dass die Querschnittsflächen des Sitzunterbaus 2 auf der ersten und zweiten Seite unterschiedlich groß sind. Alternativ ist aber auch eine zylindrische Geometrie denkbar. Der Sitzunterbau 2 ist in seiner Grundstruktur ein biegesteifes Schalenbauteil 18, das in diesem Ausführungsbeispiel in Umfangsrichtung gekrümmt ist. Die Biegesteifigkeit des Sitzunterbaus 2 kann hierdurch verbessert werden und kann konstruktiv derart ausgelegt werden, dass der Sitzunterbau 2 im Crashfall an seiner ersten Seite eine möglichst geringe translatorische Bewegung zu der Bodenebene ausführt.

Das Schalenbauteil 18 ist vorzugsweise aus einem Faserverbundwerkstoff gebildet, weiter vorzugsweise aus einem kohlenstofffaserverstärktem Kunststoff. Das Schalenbauteil 18 ist vorzugsweise aus einem nicht-metallischen Werkstoff gebildet.

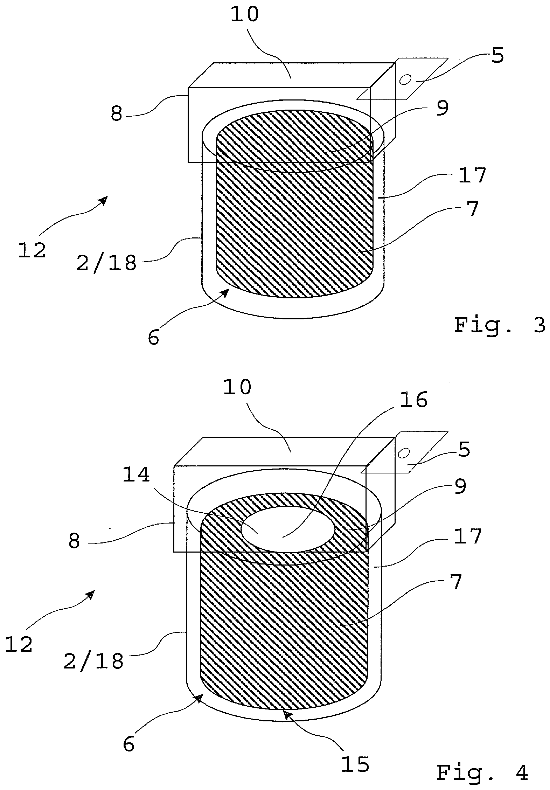

Fig. 3 zeigt eine erste Ausführungsform der Erfindung mit einem einzigen Funktionselement 7. Das Funktionselement 7 wird vorzugsweise durch ein elektrisches, pneumatisches oder hydraulisches System gebildet, das durch thermische Verlustleistung Wärme abgibt.

Fig. 3 zeigt, dass am oberen Ende des Sitzunterbaus 2 ein erstes Wärmetransportelement 8 vorgesehen ist. Am unteren Ende ist der Sitzunterbau 2 durch die Bodenanbindungsbaugruppe 4, siehe Fig. 1, verschlossen. Somit entsteht durch den Sitzunterbau 2, das erste Wärmetransportelement 8 und die Bodenanbindungsbaugruppe 4 ein Hohlraum 6. Am oberen Ende kann der Hohlraum 6 neben dem Wärmetransportelement 8 auch durch die Sitzeinheit 3 verschlossen werden. Das erste Wärmetransportelement 8 weist eine höhere Wärmeleitfähigkeit auf als das Schalenbauteil 18, wobei das erste Wärmetransportelement 8 vorzugsweise metallisch ist.

Unter dem Hohlraum 6 ist im Kontext dieser Anmeldung nicht zwingend ein hermetisch abgeriegelter Innenraum zu verstehen; der Hohlraum 6 kann damit durchaus im Vergleich zur Gesamtinnenfläche kleine Öffnungen oder Spalte aufweisen. Entscheidend ist hierbei, dass auch bei geringfügigen Öffnungen kein ausreichender Wärmeaustausch mit einer äußeren Umgebung 12 stattfinden kann.

Weiter weist das erste Wärmetransportelement 8 einen inneren und einen äußeren Teilabschnitt 9 und 10 auf. Der innere Teilabschnitt 9 ist dabei dem Hohlraum 6 zugeordnet. Das bedeutet, dass der innere Teilabschnitt 9 entweder in den Hohlraum 6 hineinragt, oder dass der innere Teilabschnitt 9 selbst einen Teil der Innenfläche des Hohlraums 6 bildet. Der äußere Teilabschnitt 10 ist zur Abgabe der Wärmeenergie einer äußeren Umgebung 12 des Sitzunterbaus 2 zugeordnet.

Vorzugsweise ist das erste Wärmetransportelement 8 durch einen metallischen Flansch gebildet, über den auch eine mechanische Verbindung zwischen dem Schalenbauteil 18 und dem ersten Wärmetransportelement 8 hergestellt werden kann. Das erste Wärmetransportelement 8 erfüllt damit nicht nur eine Wärmeübertragungsfunktion, sondern auch die Funktion der Befestigung des Sitzunterbaus 2 mit der Sitzeinheit 3.

Ferner ist das Funktionselement 7 über das erste Wärmetransportelement 8 in dem Hohlraum 6 positioniert. Das Funktionselement 7 ist derart an dem inneren Teilabschnitt 9 des ersten Wärmetransportelements 8 befestigt, dass auch eine wärmetechnische Kopplung zwischen dem Funktionselement 7 und dem ersten Wärmetransportelement 8 möglich ist.

Das erste Wärmetransportelement 8 ist mit seinem äußeren Ende 10 an einem äußeren Bauteil des Flugzeugsitzes 1, vorzugsweise an einem metallischen Bauteil, befestigt. Zur Befestigung des äußeren Endes 10 an dem Bauteil des Flugzeugsitzes 1 ist vorzugsweise ein Befestigungsmittel 5 vorgesehen, das vorzugsweise ebenfalls metallisch ist.

Durch den vorangehend beschriebenen Aufbau der ersten Ausführungsform wird eine Kühlung des Funktionselements 7 erreicht. Für die Erläuterung der Funktionsweise wird vorausgesetzt, dass die Funktionselemente 7 im Betrieb eine Temperatur aufweisen, die größer ist als die Temperatur der äußeren Umgebung 12. Insgesamt wird durch den geschlossenen Hohlraum 6 eine isolierende Wirkung erzielt, so dass sich neben dem Funktionselement 7 auch die Luft innerhalb des Hohlraums 6 erwärmt.

Die wärmetechnische Kopplung zwischen dem ersten Wärmetransportelement 8 und dem Funktionselement 7 ist so ausgeführt, dass diese Elemente unmittelbar in Kontakt stehen oder mittelbar über Verbindungsmittel in Kontakt stehen, so dass eine Wärmeleitung zwischen dem ersten Wärmetransportelement 8 und dem Funktionselement 7 möglich ist. An den sich gegenüberliegenden Flächen des Funktionselements 7 und des ersten Wärmetransportelements 8 erfolgt ferner eine Wärmeübertragung über Strahlung.

Vorzugsweise weist das Funktionselement 7 eine zylindrische Form auf, wobei sich im eingebauten Zustand zwischen der durch den Sitzunterbau 2 gebildeten Innenwand des Hohlraums 6 und der Mantelfläche des Funktionselements 7 ein Strömungsquerschnitt 17 ergibt, der sich über die gesamte Höhe des Funktionselements 7 erstreckt. Weiter besteht zwischen diesem Strömungsquerschnitt 17 und dem inneren Teilabschnitt 9 eine strömungstechnische Verbindung, so dass eine konvektive Wärmeübertragung zwischen dem Funktionselement 7 und dem inneren Teilabschnitt 9 möglich ist.

Durch den vorangehend beschriebenen Wärmeübertragungsmechanismen wird eine Wärmeenergie des Funktionselements 7 auf das erste Wärmetransportelement 8 übertragen, so dass dieses erwärmt wird. Somit steigt auch die Temperatur des äußeren Teilabschnitts 10 soweit, dass sie größer ist als die Temperatur der äußeren Umgebung 12. Dieser Temperaturgradient bewirkt eine Wärmeabgabe von dem äußeren Teilabschnitt 10 an die äußere Umgebung 12. Dieser Kühlungseffekt kann durch die bereits beschriebene Befestigung des äußeren Teilabschnitts 10 an einem Bauteil des Flugzeugsitzes 1 weiter gesteigert werden. Dies bewirkt, dass bestimmte äußere Bauteile des Flugzeugsitzes 1 als ein Wärmeabgabeelement mit im Vergleich zu dem äußeren Teilabschnitt 10 vergrößerter Oberfläche genutzt werden kann.

Insgesamt wird mit der erfindungsgemäßen Lösung damit eine Wärmeübertragung von dem Funktionselement 7 über das erste Wärmetransportelement 8 sowie über äußere Bauteile des Flugzeugsitzes 1 ermöglicht.

Fig. 4 zeigt eine zweite Ausführungsform der Erfindung, die sich im Grundaufbau nicht von dem der ersten Ausführungsform unterscheidet. Es wird daher im Folgenden nur auf die Unterschiede zwischen der ersten und der zweiten Ausführungsform eingegangen.

Die zweite Ausführungsform weist im Vergleich zu der ersten Ausführungsform einen Strömungskanal 16 auf, der sich vorzugsweise von einer zentralen Öffnung 14 an einer Oberseite des Funktionselements 7 bis zu einer zentralen Öffnung 15 an einer Unterseite des Funktionselements 7 erstreckt. Der Strömungskanal 16 bildet damit eine Art Kamin, der sich über die gesamte Höhe des Funktionselements 7 erstreckt.

Es wird damit erreicht, dass die Luft innerhalb des Kamins erwärmt wird und dadurch aufsteigt. Vorzugsweise ist der Strömungskanal 16 strömungstechnisch mit dem inneren Teilabschnitt 9 des ersten Wärmetransportelements 8 verbunden, so dass die Wärmeenergie der erwärmten Luft an das erste Wärmetransportelement 8 übertragen werden kann.

Weiter ist vorzugsweise zwischen der Öffnung 14 an der Oberseite und der Öffnung 15 an der Unterseite des Funktionselements 7 eine weitere strömungstechnische Verbindung vorgesehen, die durch den Strömungsquerschnitt 17 gebildet ist, der bereits aus der ersten Ausführungsform bekannt ist.

Die Luftmasse innerhalb des Strömungskanals 16 wird somit durch die Abwärme des Funktionselements 7 erwärmt und strömt damit in Richtung des inneren Teilabschnitts 9, wo ein Teil der Wärmeenergie des Luftmassenstroms auf den inneren Teilabschnitt 9 übertragen wird. Die abgekühlte Luftmasse kann dann über den Strömungsquerschnitt 17 zu der Öffnung 15 an der Unterseite des Funktionselements 7 zurückströmen. Durch diesen Zirkulationseffekt wird die konvektive Wärmeübertragung zwischen dem Funktionselement 7 und dem ersten Wärmetransportelement 8 verstärkt.

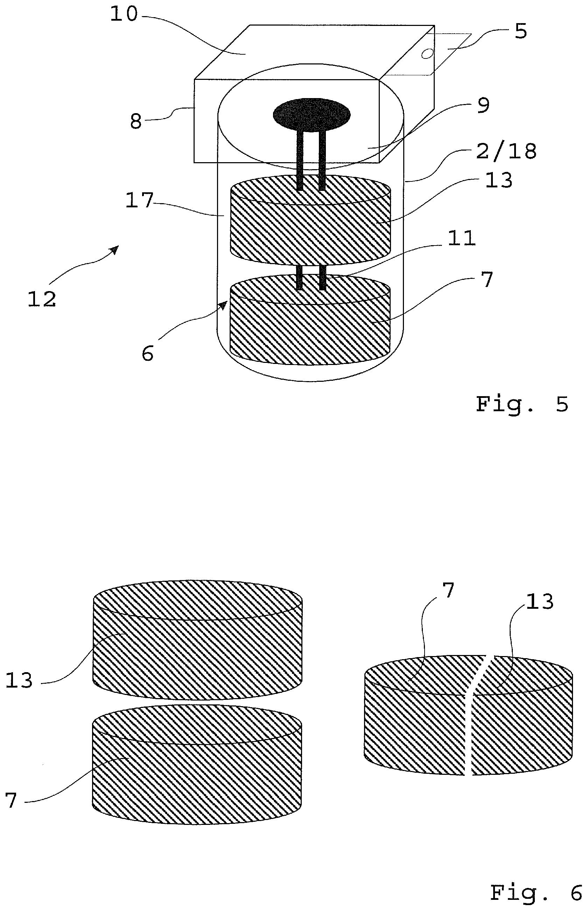

Fig. 5 zeigt eine dritte Ausführungsform der Erfindung, wobei es sich ebenfalls um eine Abwandlung der ersten Ausführungsform handelt.

Bei der dritten Ausführungsform ist ein zweites Wärmetransportelement 11 vorgesehen, das den inneren Teilabschnitt 9 mit wenigstens einem Funktionselement 7 oder 13 wärmetechnisch koppelt. Vorzugsweise ist das zweite Wärmetransportelement 11 durch ein Wärmerohr, auch "Heat-Pipe" genannt, gebildet. Eine Kühlzone des Wärmerohrs ist dabei dem inneren Teilabschnitt 9 zugeordnet.

Weiter sind in der Fig. 5 zwei vertikal übereinander angeordnete Funktionselemente 7 und 13 dargestellt. Das erste Funktionselement 7 ist dabei unterhalb des zweiten Funktionselementes 13 angeordnet, wobei sowohl das erste als auch das zweite Funktionselement 7 und 13 an das zweite Wärmetransportelement 11 gekoppelt sind. In diesem Ausführungsbeispiel wird das zweite Wärmetransportelement 11 durch zwei Wärmerohre gebildet, die beide jeweils mit dem ersten und dem zweiten Funktionselement 7 und 13 wärmetechnisch gekoppelt sind.

Das zweite Wärmetransportelement 11 ist an einem ersten Ende mit dem inneren Teilabschnitt 9 wärmetechnisch gekoppelt, und das zweite Ende des zweiten Wärmetransportelements 11 ist mit dem ersten Funktionselement 7 wärmetechnisch gekoppelt. Das zweite Wärmetransportelement 11 führt dabei durch das zweite Funktionselement 13, wobei vorzugsweise auch zwischen dem zweiten Funktionselement 13 und dem zweiten Wärmetransportelement 11 eine wärmetechnische Kopplung vorgesehen ist. Es kann so die Wärmeenergie von dem ersten und zweiten Funktionselement 7 und 13 über das zweite Wärmetransportelement 11 an den inneren Teilabschnitt 9 übertragen werden.

Innerhalb des ersten Wärmetransportelements 8 erfolgt eine Wärmeübertragung von dem inneren Teilabschnitt 9 zu dem äußeren Teilabschnitt 10, so dass die Wärmeenergie von dort an die äußere Umgebung 12 abgegeben werden kann.

Weiter sind in der Fig. 6 verschiedene Anordnungen der Funktionselemente 7 und 13 gezeigt. In der Fig. 6, links, ist eine vertikale Anordnung zweier Funktionselemente 7 und 13 dargestellt, wobei diese Ausführung nicht auf die Anzahl von zwei Funktionselementen 7 und 13 beschränkt ist. In der Fig. 6, rechts, ist dagegen eine Anordnung der Funktionselemente 7 und 13 in einer horizontalen Ebene vorgesehen. Dabei sind die beiden Funktionselemente 7 und 13 in Form von Tortenstücken angeordnet. Auch diese Ausführungsform ist nicht auf die Anzahl von zwei Funktionselementen 7 und 13 beschränkt.

Es ist vorteilhaft, wenn die Funktionselemente 7 und 13 zueinander schon vor dem Einbau in das Schalenbauteil 18 vormontiert werden.

Zu dem Offenbarungsgehalt dieser Anmeldung sind ausdrücklich beliebige Kombinationen der in den Fig. 1 bis Fig. 6 gezeigten Ausführungsformen hinzuzurechnen.

## Patentansprüche

1. Flugzeugsitz (1) mit einem Sitzunterbau (2), wobei
- der Sitzunterbau (2) an einer ersten Seite an einer Sitzeinheit (3) des Flugzeugsitzes (1) befestigbar ist, und
- der Sitzunterbau (2) an einer zweiten Seite zur flugzeugfesten Befestigung an einer Bodenanbindungsbaugruppe (4) befestigbar ist, wobei
- der Sitzunterbau (2) durch wenigstens ein biegesteifes Schalenbauteil (18) gebildet ist, wobei
- das Schalenbauteil (18) einen Hohlraum (6) zur Aufnahme von mindestens einem Funktionselement (7,13) aufweist, wobei
- der Hohlraum (6) geschlossen ist, wobei
- ein erstes Wärmetransportelement (8), umfassend einen inneren und einen äußeren Teilabschnitt (9,10), vorgesehen ist, wobei
- der innere Teilabschnitt (9) zur Aufnahme einer von dem Funktionselement (7,13) erzeugten Wärmeenergie dem Hohlraum (6) zugeordnet ist und in Kontakt mit dem Funktionselement (7,13) steht, wobei
- der äußere Teilabschnitt (10) zur Abgabe der Wärmeenergie einer äußeren Umgebung (12) des Schalenbauteils (18) zugeordnet ist, **dadurch gekennzeichnet, dass**
- das Funktionselement (7,13) hängend in dem Hohlraum (6) angeordnet ist, wobei
- das Funktionselement (7,13) an der Unterseite des ersten Wärmetransportelements (8) befestigt ist.

2. Flugzeugsitz (1) nach Anspruch 1, **dadurch gekennzeichnet, dass**
- das Material des ersten Wärmetransportelements (8) eine höhere Wärmeleitfähigkeit aufweist als das Material des Schalenbauteils (18).

3. Flugzeugsitz (1) nach einem der vorangehenden Ansprüche, **dadurch gekennzeichnet, dass**
- das Schalenbauteil (18) aus Faserverbundwerkstoff gebildet ist.

4. Flugzeugsitz (1) nach einem der vorangehenden Ansprüche, **dadurch gekennzeichnet, dass**
- der äußere Teilabschnitt (10) des ersten Wärmetransportelements (8) mit einem äußeren Bauteil des Sitzunterbaus (2) und/oder der Sitzeinheit (3) verbunden ist.

5. Flugzeugsitz (1) nach einem der vorangehenden Ansprüche, **dadurch gekennzeichnet, dass**
- der äußere Teilabschnitt (10) des ersten Wärmetransportelements (8) zwischen dem Sitzunterbau (2) und der Sitzeinheit (3) angeordnet ist.

6. Flugzeugsitz (1) nach einem der vorangehenden Ansprüche, **dadurch gekennzeichnet, dass**
- das erste Wärmetransportelement (8) als ein Verbindungsmittel zur Verbindung der Sitzeinheit (3) mit dem Sitzunterbau (2) ausgeführt ist.

7. Flugzeugsitz (1) nach einem der vorangehenden Ansprüche, **dadurch gekennzeichnet, dass**
- wenigstens zwei separate Funktionselemente (7,13) in dem Hohlraum (6) vorgesehen sind.

8. Flugzeugsitz (1) nach Anspruch 7, **dadurch gekennzeichnet, dass**
- die separaten Funktionselemente (7,13) horizontal und/oder vertikal zueinander angeordnet sind.

9. Flugzeugsitz (1) nach einem der vorangehenden Ansprüche, **dadurch gekennzeichnet, dass**
- in dem Hohlraum (6) ein zweites Wärmetransportelement (11) vorgesehen ist.

10. Flugzeugsitz (1) nach Anspruch 9, **dadurch gekennzeichnet, dass**
- das zweite Wärmetransportelement (11) durch ein Wärmerohr gebildet ist.

11. Flugzeugsitz (1) nach Anspruch 9 oder 10 unter Rückbezug auf Anspruch 7 oder 8, **dadurch gekennzeichnet, dass**
- das zweite Wärmetransportelement (11) zur wärmetechnischen Kopplung der Funktionselemente (7,13) untereinander vorgesehen ist.

12. Flugzeugsitz (1) nach einem der Ansprüche 9 bis 11 unter Rückbezug auf Anspruch 7 oder 8, **dadurch gekennzeichnet, dass**
- ein erstes Funktionselement (7) über das zweite Wärmetransportelement (11) mit dem ersten Wärmetransportelement (8) wärmetechnisch gekoppelt ist.

13. Flugzeugsitz (1) nach einem der vorangehenden Ansprüche, **dadurch gekennzeichnet, dass**
- der innere Teilabschnitt (9) des ersten Wärmetransportelements (8) so zu dem Funktionselement (7,13) angeordnet ist, dass zwischen dem Funktionselement (7,13) und dem inneren Teilabschnitt (9) des ersten Wärmetransportelements (8) eine konvektive Wärmeübertragung möglich ist.

14. Flugzeugsitz (1) nach Anspruch 13, **dadurch gekennzeichnet, dass**
- das Funktionselement (7,13) im Inneren einen sich von einer Öffnung (14) an einer Oberseite bis zu einer Öffnung (15) an einer Unterseite des Funktionselements (7,13) erstreckenden ersten Strömungskanal (16) aufweist.

## Claims

1. Aircraft seat (1) comprising a seat base (2), wherein
- a first side of the seat base (2) can be fastened to a seat unit (3) of the aircraft seat (1), and
- a second side of the seat base (2) can be fastened to a floor attachment assembly (4) in order to fasten it to the aircraft, wherein
- the seat base (2) is formed by at least one flexurally rigid shell component (18), wherein
- the shell component (18) comprises a cavity (6) for receiving at least one functional element (7, 13), wherein
- the cavity (6) is closed, wherein
- a first heat-transfer element (8) comprising an inner and an outer portion (9, 10) is provided, wherein
- the inner portion (9) is assigned to the cavity (6) and is in contact with the functional element (7, 13) in order to absorb thermal energy generated by the functional element (7, 13), wherein
- the outer portion (10) is assigned to an external environment (12) of the shell component (18) in order to dissipate the thermal energy,
**characterised in that**
- the functional element (7, 13) is suspended in the cavity (6), wherein
- the functional element (7, 13) is fastened to the bottom of the first heat-transfer element (8).

2. Aircraft seat (1) according to claim 1, **characterised in that**
- the material of the first heat-transfer element (8) comprises a higher thermal conductivity than the material of the shell component (18).

3. Aircraft seat (1) according to any of the preceding claims, **characterised in that**
- the shell component (18) is made of composite fibre material.

4. Aircraft seat (1) according to any of the preceding claims, **characterised in that**
- the outer portion (10) of the first heat-transfer element (8) is connected to an external component of the seat base (2) and/or the seat unit (3).

5. Aircraft seat (1) according to any of the preceding claims, **characterised in that**
- the outer portion (10) of the first heat-transfer element (8) is arranged between the seat base (2) and the seat unit (3).

6. Aircraft seat (1) according to any of the preceding claims, **characterised in that**
- the first heat-transfer element (8) is designed as a connection means for connecting the seat unit (3) to the seat base (2).

7. Aircraft seat (1) according to any of the preceding claims, **characterised in that**
- at least two separate functional elements (7, 13) are provided in the cavity (6).

8. Aircraft seat (1) according to claim 7, **characterised in that**
- the separate functional elements (7, 13) are arranged horizontally and/or vertically with respect to one another.

9. Aircraft seat (1) according to any of the preceding claims, **characterised in that**
- a second heat-transfer element (11) is provided in the cavity (6).

10. Aircraft seat (1) according to claim 9, **characterised in that**
- the second heat-transfer element (11) is formed by a heat pipe.

11. Aircraft seat (1) according to either claim 9 or 10 with reference to either claim 7 or 8, **characterised in that**
- the second heat-transfer element (11) is provided for thermally coupling the functional elements (7, 13) to one another.

12. Aircraft seat (1) according to any of claims 9 to 11 with reference to either claim 7 or 8, **characterised in that**
- a first functional element (7) is thermally coupled to the first heat-transfer element (8) by means of the second heat-transfer element (11).

13. Aircraft seat (1) according to any of the preceding claims, **characterised in that**
- the inner portion (9) of the first heat-transfer element (8) is arranged relative to the functional element (7, 13) such that convective heat transfer is possible between the functional element (7, 13) and the inner portion (9) of the first heat-transfer element (8).

14. Aircraft seat (1) according to claim 13, **characterised in that**
- the functional element (7, 13) comprises, in the interior thereof, a first flow duct (16) that extends from an opening (14) in the top up to an opening (15) in the bottom of the functional element (7, 13).

## Revendications

1. Siège d'avion (1) comportant une sous-structure de siège (2), dans lequel
- la sous-structure de siège (2) peut être fixée sur un premier côté à une unité de siège (3) du siège d'avion (1), et
- la sous-structure de siège (2) peut être fixée sur un second côté pour une fixation solidaire de l'avion à un module d'amarrage au plancher (4), dans lequel
- la sous-structure de siège (2) est formée d'au moins un élément de coque (18) résistant à la flexion, dans lequel
- l'élément de coque (18) présente une cavité (6) pour recevoir au moins un élément fonctionnel (7,13), dans lequel
- la cavité (6) est fermée, dans lequel
- un premier élément de transfert de chaleur (8), comprenant une section partielle intérieure et une extérieure (9,10), est prévu, dans lequel
- la section partielle intérieure (9) est associée à la cavité (6) pour la réception d'une énergie thermique produite par l'élément fonctionnel (7,13) et se trouve en contact avec l'élément fonctionnel (7,13), dans lequel
- la section partielle extérieure (10) est associée à un environnement extérieur (12) de l'élément de coque (18) pour la libération de l'énergie thermique,
**caractérisé en ce que**
- l'élément fonctionnel (7,13) est disposé suspendu dans la cavité (6), dans lequel
- l'élément fonctionnel (7,13) est fixé à la face inférieure du premier élément de transfert de chaleur (8).

2. Siège d'avion (1) selon la revendication 1, **caractérisé en ce que**
- le matériau du premier élément de transfert de chaleur (8) présente une conductivité thermique plus élevée que le matériau de l'élément de coque (18).

3. Siège d'avion (1) selon une des revendications précédentes, **caractérisé en ce que**
- l'élément de coque (18) est composé d'un matériau composite de fibres.

4. Siège d'avion (1) selon une des revendications précédentes, **caractérisé en ce que**
- la section partielle extérieure (10) du premier élément de transfert de chaleur (8) est reliée à un composant extérieur de la sous-structure de siège (2) et/ou de l'unité de siège (3).

5. Siège d'avion (1) selon une des revendications précédentes, **caractérisé en ce que**
- la section partielle extérieure (10) du premier élément de transfert de chaleur (8) est disposée entre la sous-structure de siège (2) et l'unité de siège (3).

6. Siège d'avion (1) selon une des revendications précédentes, **caractérisé en ce que**
- le premier élément de transfert de chaleur (8) est réalisé sous la forme d'un moyen de liaison pour relier l'unité de siège (3) à la sous-structure de siège (2).

7. Siège d'avion (1) selon une des revendications précédentes, **caractérisé en ce que**
- au moins deux éléments fonctionnels séparés (7,13) sont prévus dans la cavité (6).

8. Siège d'avion (1) selon la revendication 7, **caractérisé en ce que**
- les éléments fonctionnels séparés (7,13) sont disposés horizontalement et/ou verticalement les uns par rapport aux autres.

9. Siège d'avion (1) selon une des revendications précédentes, **caractérisé en ce que**
- dans la cavité (6) est prévu un second élément de transfert de chaleur (11).

10. Siège d'avion (1) selon la revendication 9, **caractérisé en ce que**
- le second élément de transfert de chaleur (11) est formé par un tube thermique.

11. Siège d'avion (1) selon la revendication 9 ou 10 en référence à la revendication 7 ou 8, **caractérisé en ce que**
- le second élément de transfert de chaleur (11) est prévu pour coupler thermiquement des éléments fonctionnels (7,13) les uns en dessous des autres.

12. Siège d'avion (1) selon une des revendications 9 à 11 en référence à la revendication 7 ou 8, **caractérisé en ce que**
- un premier élément fonctionnel (7) est couplé thermiquement au premier élément de transfert de chaleur (8) par le biais du second élément de transfert de chaleur (11).

13. Siège d'avion (1) selon une des revendications précédentes, **caractérisé en ce que**
- la section partielle intérieure (9) du premier élément de transfert de chaleur (8) est disposée par rapport à l'élément fonctionnel (7,13) de telle sorte que, entre l'élément fonctionnel (7,13) et la section partielle intérieure (9) du premier élément de transfert de chaleur (8), une transmission de chaleur par convection est possible.

14. Siège d'avion (1) selon la revendication 13, **caractérisé en ce que**
- l'élément fonctionnel (7,13) présente à l'intérieur un premier canal d'écoulement (16) s'étendant depuis une ouverture (14) sur un côté supérieur jusqu'à une ouverture (15) sur un côté inférieur de l'élément fonctionnel (7,13).
